# EUROPEAN PATENT SPECIFICATION

(11) **EP 2 060 203 B1**
(45) Date of publication and mention of the grant of the patent: **27.09.2017**
(21) Application number: 09003034.7
(22) Date of filing: 29.11.2007
(51) Int. Cl.: A47B 21/03

(54) **Operating device**
Betriebsvorrichtung
Dispositif d'actionnement

(30) Priority: 21.12.2006 JP 2006343945; 27.08.2007 US 895851
(43) Date of publication of application: 20.05.2009
(62) Divisional of application: 07023175.8
(73) Proprietor: Fumoto Giken Co., Ltd., Miura-gun Kanagawa 240-0012 (JP)
(72) Inventor: Yamamoto, Naoyuki, Miura-gun Kanagawa, 240-0012 (JP); Yamamoto, Ryouhei, Miura-gun Kanagawa, 240-0012 (JP)
(74) Representative: Patentanwälte Bauer Vorberg Kayser

(56) References cited:
- EP-A- 0 651 175
- EP-A1- 1 197 165
- DE-U1- 29 508 612
- US-A1- 2007 095 993

## Description

### TECHNICAL FIELD

The present invention relates to an operating device attached to a moving apparatus for a desk, more specifically, an operating device in which the relative position of an operating portion and an operating object portion changes.

### BACKGROUND OF INVENTION

Generally, office workers work with a personal computer (PC) placed on their desks. For example, in the case of a desk-top type computer, at least a display and a keyboard, in some cases the computer main unit, are placed on a desk. In addition, in the case of a laptop-type computer, the entire laptop is placed on a desk.

However, office workers are not always using their PC when they are working. For example, when reading a document or taking notes while on the phone, the time when not using a computer is not necessarily short. Thus, if a PC is placed on a desk even when it's not in use, it takes up working space on the desk.

In order to solve such issues, an elevating apparatus which places the PC on a tray and moves the tray vertically, is proposed. In this apparatus, the tray is lowered when using the PC and the tray is raised to secure working space on the desk when the PC is not in use. An example is known from Japanese Patent Application No. 2000-135123. Besides, DE 295 08612 also discloses an example of operation means.

Among such elevating apparatuses, some may use an extension mechanism consisting of a cylinder and a piston. In such an extension mechanism, the length of the overall extension mechanism changes when the piston moves within the cylinder, and the overall length of the extension mechanism is determined according to the position of the piston. Also, inside the cylinder which is divided into two by the piston is in communication with front and back faces of the piston by a communicating channel, and fluid in the cylinder moves in the communicating channel along with the movement of the piston. A valve to be opened and closed is provided inside the communicating channel, and by closing this valve, the movement of the piston is fixed, thereby the overall length of the extension mechanism is fixed.

The operation of this valve is performed by an operating button protruding to the top end of the piston rod, and configured such that the valve is opened by pressing the button, thereby the piston can be moved, and the valve is closed when the button is restored, thereby the position of the piston is fixed.

Conventionally, an operating device to operate a button has a operating portion provided with a lever and the like, a communicating mechanism to communicate the operating amount of the operating portion to the button, an action portion to act the operating amount of the operating portion to the button. Because the operating porting is arranged on the lower side of the tray and the action portion is provided to the front end of the piston rod, relative position of the operating portion and the action portion changes when the tray of the elevating apparatus is moved vertically.

The conventional communicating mechanism is a mechanism consisting of an inner wire and an outer wire, and configured such that the operating amount is communicated by operating the inner wire stored inside the outer wire in an axial direction. Also, the inner wire and the outer wire have flexibility, and are configured to change form according to the change in relative position of the operating portion and the action portion.

However, these wires are in a linear form in the normal shape, and a restoring force is generated to restore to the original form when the wires are bent according to the position of the tray of the elevation apparatus. Because this restoring force acts on the elevation apparatus with wires attached, there is a problem of making the elevating operation of the tray heavy or light.

Also, friction is generated between the inner wire and the outer wire when the wires are bent, and the friction force changes according to the amount of bend of the wire, resulting in a problem of unstable operating load (force (load) necessary for an operator to operate the operating portion) of the operating portion.

The present invention is made with a view of the above facts and its objective is to propose an operating device attached to a moving apparatus which allows an operator to effectively utilize work space on a desk, and has a stable operating load.

### BRIEF SUMMARY OF THE INVENTION

Such an objective can be achieved by the present invention as claimed in claim 1.

An operating device attached to a moving apparatus consisting of a platform, a placing portion having a placing face to place a placing object, an elevation oscillating member comprising a rear end portion oscillatably connected to the platform and a front end portion oscillatably connected to the placing portion, an extension mechanism located between the elevation oscillating member and the platform, and a switching means to switch the extension position of the extension mechanism to a lock state and a release state that allows extension, wherein the elevation oscillating member, the platform, and the extension means comprises a triangular link structure, and the operating device consisting of a pressurizing operation means to apply pressure to a liquid pressure communicating medium according to the displacement of an operating member by an external operation, an action means to output the pressure applied from the pressurizing operation means as an operating pressure for the switching operation of the switching means, and a conducting tube with flexibility to guide the liquid pressure communicating medium from the pressurizing operation means to the action means, wherein the conducting tube is formed of a thermoplastic resin.

Therefore, increase in the volume of the oil can be absorbed when the oil, as pressure communicating medium, expanded by the increase in temperature, because the conducting tube gradually soften as the temperature increases, and the diameter of the tube can easily be expanded.

The pressurizing operation means is a operating side piston that advances and retreats according to the displacement of the operating member, and an operating side cylinder filled with a liquid pressure communicating medium.

The action means has an acting side piston which the pressure from the pressurizing operation means is applied, an acting side cylinder which stores the acting side piston and is filled with a liquid pressure communicating medium, and an acting member which advances and retreats along with the acting side piston as a unit.

The pressure communicating medium is oil, the positioning means is a opening and closing means to open and close a communicating channel connecting the space in the cylinder divided into two by the piston in an extension mechanism having a cylinder filled with fluid and a piston reciprocably stored in the cylinder, and the opening and closing means is opened and closed by the action means.

The communication of the operating pressure from the pressurizing operation means to the action means is performed though the pressure communicating medium which is a fluid, the operating pressure is communicated to the action portion and the pressure required for operation is stabilized even when the conduction channel is deformed due to a change in the relative position of the pressurizing operation means and the action means. The placing portion may be moved vertically by sliding the elevation oscillating member as a fixing release state of the extension means. By moving the placing portion, the angle of the placing portion and the elevation oscillating member changes, thereby the relative position of the pressurizing operation means on the placing portion side and the action means on the elevation oscillating member side changes. Even when such a change in the relative position occurs, the pressure communicating medium is guided though the flexible conduction tube, thereby the bend of the conduction tube does not obstruct the elevation operation of the placing portion, and also the operating load is maintained in a stable fashion.

An amount of the displacement of the operating member is communicated to the action means through the pressure communicating medium by moving the piston with the operating member, thereby the amount of the displacement of the operating side can be communicated accurately to the action portion side. The acting side piston converts the amount of displacement of the operating side communicated though the pressure communicating medium into the operation displacement, thereby the amount of the displacement of the operating side can be accurately acted as the displacement of the acting side. The length of the extension mechanism can be adjusted to an arbitrary length by configuring the extension mechanism with the cylinder and the piston. Also, by using the opening and closing means to open and close the distribution channel to insert the piston as a lock mechanism, the length can be fixed at an arbitrary position. Further, by using oil as a pressure communicating medium, the operation displacement of the pressure operating means side can be accurately communicated sequentially to the action means side, thereby the open-close operation of the opening and closing means may be performed with high accuracy.

### BRIEF DESCRIPTION OF THE DRAWINGS

Figure 1 is a side view of a moving apparatus using an operating device.
Figure 2 is a plan view of a moving apparatus using an operating device.
Figure 3 is an overall view of an operating device.
Figure 4 is a perspective plain view of a moving apparatus placing portion provided to an operating device.
Figure 5 is a cross-sectional side view of an extension mechanism.
Figure 6 is a cross-section view of an operating device.
Figure 7 is an overall perspective view of an operating device action portion.

### DETAILED DESCRIPTION OF INVENTION

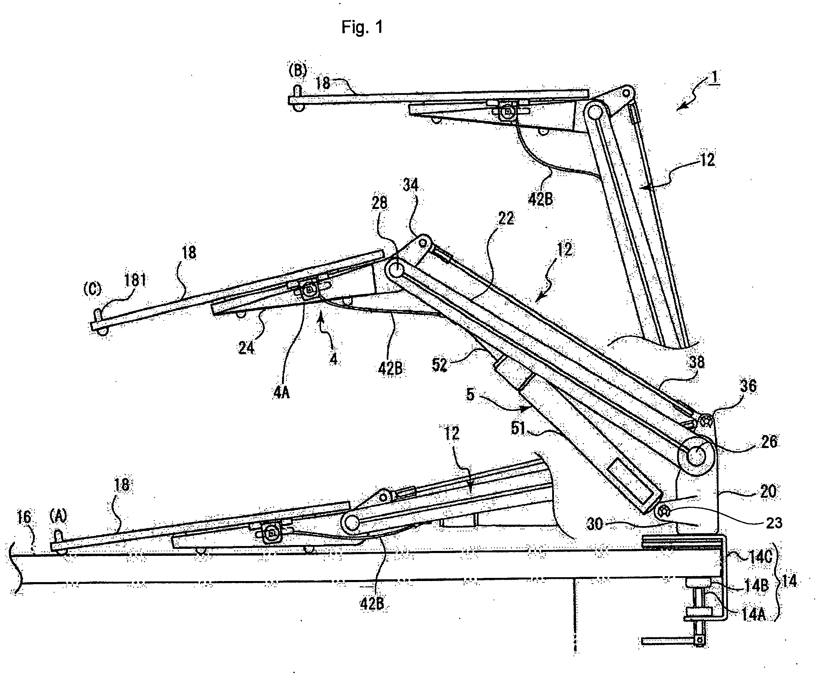

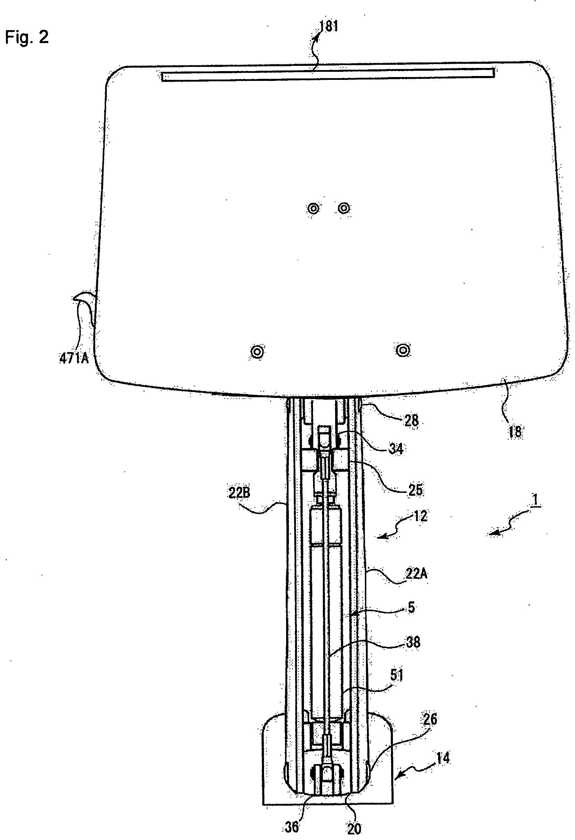

The present invention will hereinafter be more specifically described in reference to drawings. As shown in figure 1, a moving apparatus 1 according to the present invention is provided with a placing portion 18 (see also figure 2) for placing a personal computer (a laptop type), a moving portion 12 to move the placing portion 18 between a use position for using the personal computer and an arbitrary nonuse position different from the use position, and a fixation device 14 to fix the moving portion 12 to a desk 16 detachably as a fixing means.

The fixation device 14 consisting of a contact portion 14C with an angled "U"-shaped cross section, and its upper face contacting with the lower face of a base 20 of the moving portion 12, and the upper inner face contacting with the surface of the desk. This contact portion 14C is fixed to the desk 20 by contacting a front end portion 14B with the back face of the desk by a screw 14A, resulting with the moving portion 12 fixed to the desk 16. As also shown in figure 2, the moving portion 12 is provided with a base 20, a prop 22 rotatably attached to the base 20 through a link 26, and a supporting portion 24 rotatably attached to the prop portion 22 through a link 28 to support the placing portion 18.

As shown in figure 2, the prop 22 is an elevation oscillating member consisting of two prop members 22A and 22B. Two prop members 22A and 22B are installed on the base 20 which is a platform, and the support portion 24, in a way that retains a predetermined spacing.

A link 25 is provided to a position that moves from the center of two prop members 22A and 22B towards the support portion 24 side. The link 25 has an action portion 4C of an operating device 4 (described later) installed rotatably. The action portion 4C is connected to the front end of a piston rod 5 2 of an extension mechanism 5. The extension mechanism 5 is provided with a cylinder main body 51 which has a cylinder, and a piston which is stored in the cylinder, the piston is connected to a piston rod 52, and the overall length consisting of the cylinder main body 51 and the piston rod 52 is configured to extend and contract by moving the piston within the cylinder.

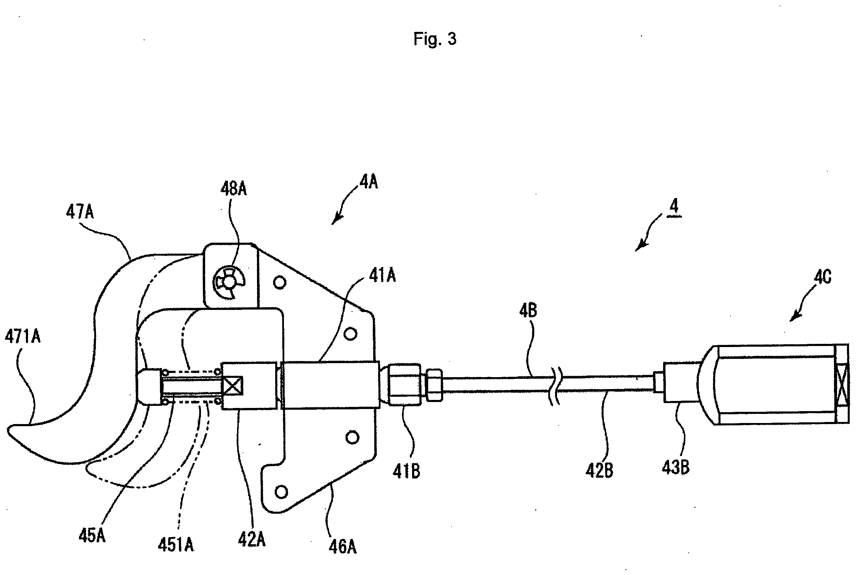

As shown in figures 1 and 3, an upper projection 34 is provided to the rear end of the supporting portion 24 provided with the link 28, a lower projection 36 is also formed on a portion of the base 20 where attached to the link 26, a connecting rod 38 is placed between the upper projection 34 and the lower projection 36. Both ends of the connecting rod 38 are rotatably connected to the upper projection 34 and the lower projection 36. By this connecting rod 38, the placing portion 18 can maintain the inclination angle within a predetermined range when the supporting member 2 is moved vertically.

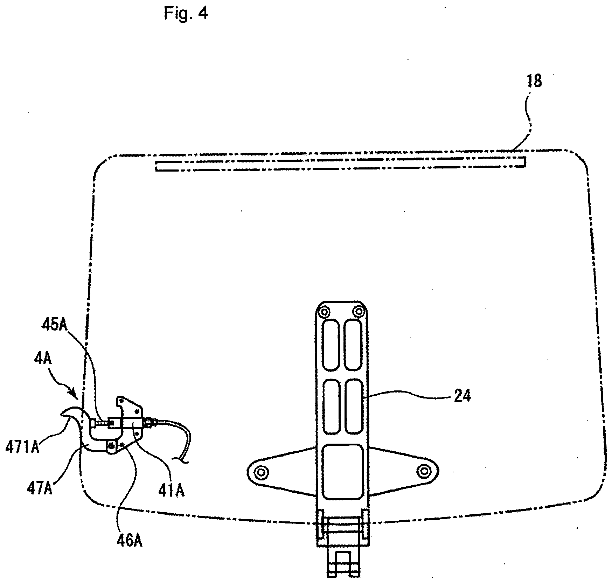

Next, an operating device 4 to release a lock of the extension mechanism 5 is explained. Figure 3 is an overall view of the operating device 4. The operating device 4 has an operating portion 4A as a pressurizing operation means, an action portion 4C as an action means, and a connecting tube 4B as a conduction channel to guide oil that is pressure communicating medium, between the operating portion 4A and the action portion 4C. As shown in figure 4, the operating portion 4A is provided to perform an operation of releasing the lock of the extension mechanism 5 by a user. The operating portion 4A is fixed on a lower face of the placing portion 18 and provided to a position that is closer the edge of the placing portion 18 so that it enables the release operation simultaneously when performing the elevation operation on the placing portion 18.

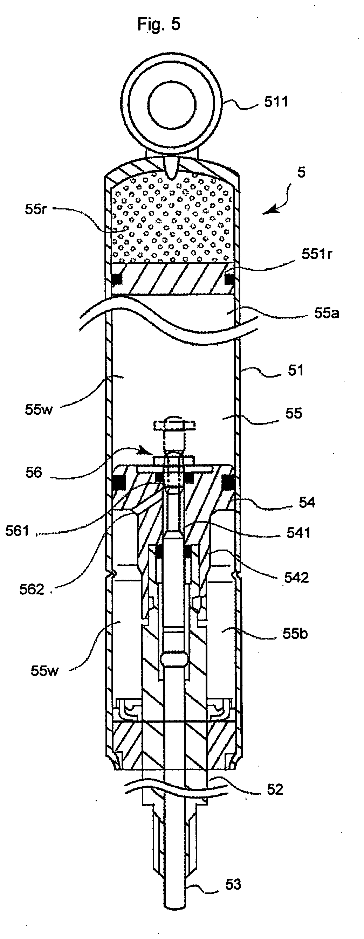

Next, a configuration of the extension mechanism 5 is explained. Figure 5 is a cross sectional side view of the extension mechanism 5. The extension mechanism 5 is provided with a cylinder main body 51, piston 54, a piston rod 52, gas 55r, a piston 551r, and a positioning mechanism 56.

A loop portion 511 is provided to one end of the cylinder main body 51 as a connecting portion, and the loop portion 511 is rotatably supported by a supporting rod 23 which is supported by a supporting base 30 of the base 20. The cylinder main body 51 is formed in a cylindrical form and a cylinder 55 is formed inside. The piston 54 is stored in the cylinder 55 and a first chamber 5 5 a and a second chamber 55b divide the cylinder 55. The first chamber 55a and the second chamber 55b are filled with a fluid 55w, such as oil. An attaching portion 542 of the piston rod 52 is provided to the piston 54 on the second chamber 55b side, and one end of the piston rod 52 is connected to the attaching portion 542. The other end of the piston rod 52 protrudes outside of the cylinder 55 and an operating button 53 protrudes on the top end. The piston rod 52 advances and retreats against the cylinder 55 when the piston 54 moves within the cylinder 55, thereby the overall length of the extension mechanism 5 is configured to expand and to contract.

An operating rod 541 is inserted into the center of the piston rod 52 in an axial direction, one end of the operating rod 541 is connected to a lock valve 561 and the other end consisting of the operating button 53 described above. The lock valve 561 is stored inside the piston 54. A distribution channel 562 is formed on the piston 54, and one end of distribution channel 562 is opened to the first chamber 55a and the other end is opened to the second chamber 55b. The fluid 55w filled in the cylinder 55 is configured to be able to move between the first chamber 55a and the second chamber 55b through this distribution channel 562, thereby the piston 54 can move when the fluid in a movable state.

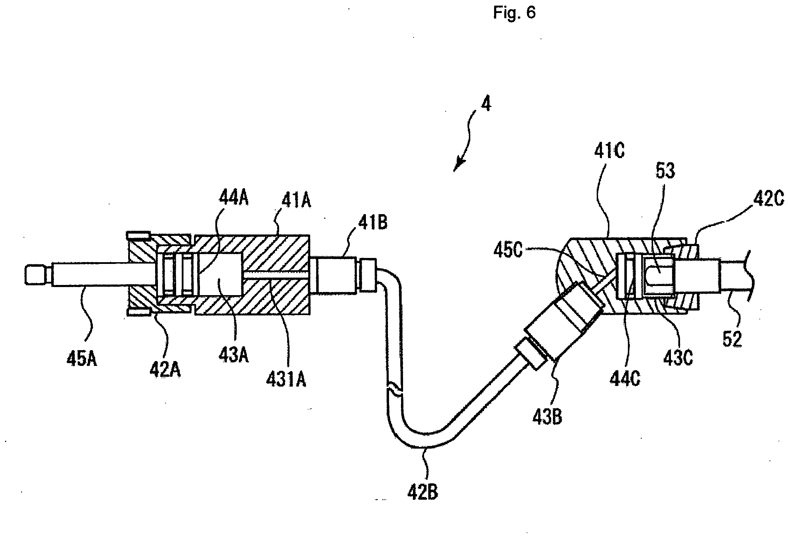

A lock valve 561 is provided to the opening of the distribution channel 562 on the first chamber 55a side. Switching operation of the lock valve 561 is performed against the operating button 53 (see figure 6). When the operating button 53 is pressed, the lock valve 561 protrudes to the first chamber 55a side and the distribution channel 562 is an open state, thereby the piston 54 is configured to be in a movable state, which is a state that allows extension. Also, when the lock valve 561 is in a closed state where the lock valve is blocking the opening of the distribution channel 562 on the first chamber 55a side, the extension mechanism 5 is in a state that is unable to extend, and in a state that is positioned in a predetermined length. In this way, the positioning mechanism 56 is provided with an operating rod 541, a lock valve 561, and a distribution channel 562. The operating button 53 is consistently biased in the direction of projection, and the state that is unable to extend is a waiting position.

The gas 55r and the piston 551r are provided to the first chamber 55a. The gas spring piston 551r separates the gas 55r and oil 55w, the gas 55r is compressed and decreases in volume when the load is applied to the extension mechanism 5 in a compression direction, thereby acting as a buffer mechanism. Also, this gas spring applies constant pressure in a direction to push out the piston rod 52.

The placing portion 18 is fixed to the supporting portion 24. On this placing portion 18, a personal computer and the like are placed. A flange 181 is formed on the narrow side of the near side of the placing portion 18, and is constructed to prevent a placed personal computer from dropping when the placing portion 18 is tilted.

According to the invention the conducting tube 42B is formed with a thermoplastic resin. In such case, increase in the volume of the oil can be absorbed when the oil, as pressure communicating medium, expanded by the increase in temperature, because the conducting tube 42B gradually soften as the temperature increases, and the diameter of the tube can easily be expanded. Consequently, the trouble, such that the thermal expansion of the oil presses the piston 44C of the action portion 4C and operate the operating button 53, is suppressed. Such effect is gradually exerted as the temperature of the atmosphere rises, thus the diameter of the tube does not expand by the application of the operating pressure at an operation.

Figure 6 is a cross sectional view of the operating device 4. The operating portion 4A is provided with an operating portion main body 41A, an attaching portion 46A to fix the operating portion main body 41A to the placing portion 18 (shown in figure 3), an operating member 47A, and a piston 44A which has a piston rod 45A. The operating portion main body 41A and the attaching portion 46A is formed as a unit, a cylinder 43A is formed inside the operating portion main body 41A, and the piston 44A is stored in the cylinder 43A. The cylinder 43A is blocked by a lid 42A. The piston rod 45A connected to the piston 44A protrudes outside of the operating portion main body 41A, and its front end contacts the operating member 47A. Also, the operating portion main body 41A is connected to a conducting tube 42B through the connecting portion 41B, the connecting tube 4B and the cylinder 43A are in communicative connection through the communicating channel 431A.

On the attaching portion 46A, the rear end of the operating member 47A is slidably supported by the supporting pin 48A. On the top end of the operating member 47A, a finger hook 471A is formed in an outward curb, and this finger hook 471A is exposed outside from the edge of the placing portion 18 (see figure 4). The finger hook 471A is attached to the top end of the piston rod 45A, and configured to slide the operating member 47A, thereby pressing in the piston rod 45A by hooking a finger on the finger hook 471A and pulling. The spring 451A is mounted externally to the piston rod 45A, and biasing the piston rod 45A in the direction of pulling out. This is for restoring the piston rod 45A after the releasing operation.

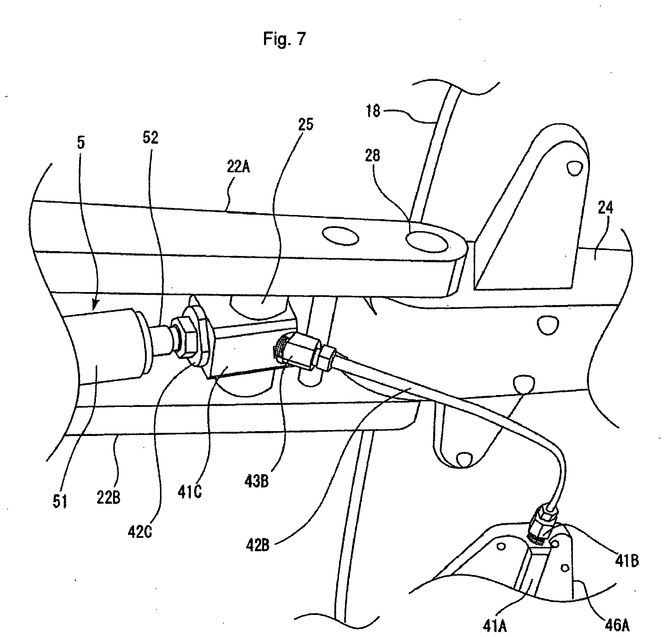

Figure 7 is a perspective view showing the mounting condition of the action portion 4C. The action portion 4C is provided with an action portion main body 41C, a connecting portion 42C to connect and fix the top end of the piston rod 52 in the extension mechanism 5, and a piston 44C. A cylinder 43C is formed inside the action portion main body 41C, and the piston 44C is stored in the cylinder 43C. Also, the operating button 53 of the piston rod 52 connected through the connection portion 42C is inserted into the cylinder 43C, and attached to a face on one side of the piston 44C. On a face on the other side of piston 44C, an oil chamber filled with oil is formed by the cylinder 43C and the piston 44C (Figure 5 shows a condition where the oil is pressed out).

A communicating channel 45C is connected to the cylinder 43C and a conducting tube 42B which is connected through the connecting portion 43B is connected to the communicating channel 45C. The conducting tube 42B is a tubal body formed with a flexible material, for example, it may be formed by synthetic resin. By configuring the conducting tube 42B with a soft material, a decrease in the resistance against deformation is achieved, thereby suppressing any excess resistance from occurring when performing the elevation operation of the placing portion 18. Oil is filled in the cylinder 43A on the operating portion 4A side, the cylinder 43C on the action portion 4C side, and the conducting tube 42B, as a pressure communicating medium.

Action of the operating device 4 configured as described above is hereinafter explained. When hooking a finger on the finger hook 471A and pulling the finger, the operating member 47A presses the piston rod 45A in. As a result, the piston 44A on the operating portion 4A side is pressed by the piston rod 45A, and the oil is pressed out from the cylinder 43A. The pressed out oil flows into the cylinder 43C on the action portion 4C side by conducting tube 42B, pressing out the piston 44C, and pressing the operating button 53 in. As a result, the lock on the extension mechanism 5 is released, thereby the placing portion 18 can be moved vertically. The lock released state can be maintained by maintaining the state where the operating button 53 is pressed constantly.

As shown in figure 1, the amount of bend of the conducting tube 42B is different for the condition where placing portion 18 is lowered to the desk (use position (A)), the condition where lifted to an upper most position (upper most position (B)), and the condition where fixed on a position in the middle (middle position C)). In a configuration to communicate the operating displacement by a wire, the operating pressure changes by the difference in the amount of bend, and it is unstable. This is thought to be because the contacting pressure between an inner wire and an outer wire changes by bending the wires.

In the present invention, the medium to communicate the operating pressure is fluid, the operating pressure (the force necessary to pull the operating member) can be stabilized without being influenced by the bending amount of the conducting tube 42B or the position of the placing portion 18.

## Claims

1. An operating device attached to a moving apparatus for a desk, wherein the moving apparatus comprises a platform (20), a placing portion (18) having a placing face to place an object, an elevation oscillating member consisting of two prop members (22A) and (22B) and comprising a rear end portion oscillatably connected to said platform (20) and a front end portion oscillatably connected to said placing portion (18), an extension mechanism (5) located between said elevation oscillating member and said platform (20), and a switching means to switch the extension position of said extension mechanism to a lock state and a release state that allows extension; wherein said elevation oscillating member, said platform (20), and said extension means (5) comprises a triangular link structure; and wherein the operating device comprises a pressurizing operation means (4A) to apply pressure to a liquid pressure communicating medium according to a displacement of an operating member (47A) by an external operation; an action means (4C) to output the pressure applied from said pressurizing operation means as an operating pressure for a switching operation of said switching means; and a conducting tube (42 B) with flexibility to guide the liquid pressure communicating medium from the pressurizing operation means to said action means (4C), wherein said conducting tube (42B) is formed of a thermoplastic resin that allows the conducting tube (42B) to gradually soften as the temperature increases.

2. The operating device attached to a moving apparatus for a desk according to claim 1, wherein said pressurizing operation means is a piston (44A) that advances and retreats according to the displacement of the operating member (47A), and a cylinder (43A) filled with a liquid pressure communicating medium.

3. The operating device attached to a moving apparatus for a desk according to claim 1, wherein said action means has a piston (52) which the pressure from said pressurizing operation means is applied, a cylinder which stores said piston (52) and is filled with a liquid pressure communicating medium, and an acting member which advances and retreats along with said piston (52) as a unit.

4. The operating device attached to a moving apparatus for a desk according to claim 1, wherein said pressure communicating medium is oil; said positioning means is an opening and closing means to open and close a communicating channel connecting a space in the cylinder divided into two by a piston (52) in an (5) mechanism having a cylinder (51) filled with fluid and a piston (52) reciprocally stored in the cylinder (51); and said opening and closing means is opened and closed by said action means.

## Patentansprüche

1. Bedienungsvorrichtung, die an einer Bewegungsvorrichtung für einen Tisch angebracht ist, wobei die Bewegungsvorrichtung eine Platte (20) aufweist, einen Abstellteil (18) mit einer Abstellfläche zum Abstellen eines Objekts, ein Hebependelelement, das aus zwei Stützenelementen (22A) und (22B) zusammengesetzt ist und einen hinteren Endteil aufweist, der hin- und herbewegbar mit der Platte (20) verbunden ist, und einen vorderen Endteil, der hin- und herbewegbar mit dem Abstellteil (18) verbunden ist, einen Verlängerungsmechanismus (5), der zwischen dem Hebependelelement und der Platte (20) angeordnet ist, und ein Schaltmittel, um die Verlängerungsposition des Verlängerungsmechanismus in einen Arretierungszustand und einen Freigabezustand, der eine Verlängerung ermöglicht, zu stellen; wobei das Hebependelelement, die Platte (20) und das Verlängerungsmittel (5) eine Dreiecksverbindungsstruktur aufweisen; und wobei die Bedienungsvorrichtung ein Druckbeaufschlagungs-Betätigungsmittel (4A) aufweist, um Druck auf ein flüssiges, druckvermittelndes Medium entsprechend einer Verlagerung eines Betätigungselements (47A) durch eine externe Bedienung auszuüben; ein Aktionsmittel (4C), um den von dem Druckbeaufschlagungs-Betätigungsmittel ausgeübten Druck als einen Arbeitsdruck für einen Schaltvorgang des Schaltmittels auszugeben; und ein Führungsrohr (42B) mit einer Nachgiebigkeit, um das flüssige, druckvermittelnde Medium von dem Druckbeaufschlagungs-Betätigungsmittel zu dem Aktionsmittel (4C) zu leiten, wobei das Führungsrohr (42B) aus einem thermoplastischen Kunststoff gebildet ist, der ein graduelles Weichwerden des Führungsrohrs (42B) mit steigender Temperatur ermöglicht.

2. Bedienungsvorrichtung, die an einer Bewegungsvorrichtung für einen Tisch angebracht ist, nach Anspruch 1, wobei das Druckbeaufschlagungs-Betätigungsmittel ein Kolben (44A) ist, der sich entsprechend der Verlagerung des Betätigungselements (47A) vor und zurück bewegt, und ein Zylinder (43A), der mit einem flüssigen, druckvermittelnden Medium gefüllt ist.

3. Bedienungsvorrichtung, die an einer Bewegungsvorrichtung für einen Tisch angebracht ist, nach Anspruch 1, wobei das Aktionsmittel einen Kolben (52) aufweist, auf den der Druck von dem Druckbeaufschlagungs-Betätigungsmittel ausgeübt wird, einen Zylinder, der den-Kolben (52) lagert und mit einem flüssigen, druckvermittelnden Medium gefüllt ist, und ein Aktionselement, das sich zusammen mit dem Kolben (52) als eine Einheit vor und zurück bewegt.

4. Bedienungsvorrichtung, die an einer Bewegungsvorrichtung für einen Tisch angebracht ist, nach Anspruch 1, wobei das druckvermittelnde Medium Öl ist; das Positioniermittel ein Öffnung- und Schließmittel ist, um einen Verbindungskanal zu öffnen und zu schließen, der einen Raum in dem durch einen Kolben (52) zweigeteilten Zylinder in einem Mechanismus (5) mit einem Zylinder (51), der mit Fluid gefüllt ist, und einem Kolben (52), der in dem Zylinder (51) hin und her beweglich gelagert ist, verbindet; und das Öffnungs- und Schließmittel durch das Aktionsmittel geöffnet und geschlossen wird.

## Revendications

1. Dispositif de manoeuvre monté sur un dispositif de déplacement pour une table, dans lequel ledit dispositif de déplacement présente une plaque (20), une partie de dépôt (18) ayant une face de dépôt pour déposer un objet, un élément oscillant élévateur qui se compose de deux éléments d'appui (22A) et (22B) et qui comprend une partie d'extrémité arrière reliée de manière oscillante à ladite plaque (20) et une partie d'extrémité avant reliée de manière oscillante à ladite partie de dépôt (18), un mécanisme d'extension (5) situé entre ledit élément oscillant élévateur et ladite plaque (20), et un moyen de commutation pour faire passer la position d'extension dudit mécanisme d'extension à un état d'arrêt et à un état de libération qui permet une extension; dans lequel ledit élément oscillant élévateur, ladite plaque (20) et ledit moyen d'extension (5) présentent une structure de liaison triangulaire; et dans lequel le dispositif de manoeuvre comprend un moyen d'actionnement de mise sous pression (4A) pour appliquer une pression à un milieu liquide communiquant la pression, en fonction d'un déplacement d'un élément d'actionnement (47A) par un manoeuvre externe; un moyen d'action (4C) pour délivrer la pression appliquée à partir dudit moyen d'actionnement de mise sous pression en tant que pression de travail pour une opération de commutation dudit moyen de commutation; et un tube conducteur (42B) ayant une flexibilité pour guider le milieu liquide communiquant la pression à partir du moyen d'actionnement de mise sous pression vers ledit moyen d'action (4C), dans lequel ledit tube conducteur (42B) est réalisé dans une résine thermoplastique qui permet au tube conducteur (42B) de se ramollir graduellement au fur et à mesure que la température augmente.

2. Dispositif de manoeuvre monté sur un dispositif de déplacement pour une table, selon la revendication 1, dans lequel le moyen d'actionnement de mise sous pression est un piston (44A) qui se déplace en avant et en arrière en fonction du déplacement de l'élément d'actionnement (47A), et un cylindre (43A) qui est rempli d'un milieu liquide communiquant la pression.

3. Dispositif de manoeuvre monté sur un dispositif de déplacement pour une table, selon la revendication 1, dans lequel le moyen d'action comprend un piston (52) auquel est appliquée la pression provenant dudit moyen d'actionnement de mise sous pression, un cylindre qui loge ledit piston (52) et est rempli d'un milieu liquide communiquant la pression, et un élément d'action qui se déplace en avant et en arrière conjointement avec ledit piston (52) en tant qu'unité.

4. Dispositif de manoeuvre monté sur un dispositif de déplacement pour une table, selon la revendication 1, dans lequel le milieu communiquant la pression est de l'huile; le moyen de positionnement est un moyen d'ouverture et de fermeture pour ouvrir et fermer un canal de communication reliant un espace dans le cylindre divisé en deux par un piston (52) dans un mécanisme (5) ayant un cylindre (51) rempli de fluide et un piston (52) logé à va-et-vient dans le cylindre (51); et le moyen d'ouverture et de fermeture est ouvert et fermé par ledit moyen d'action.
